# EUROPÄISCHE PATENTSCHRIFT

(11) **EP 0 631 084 B1**
(45) Veröffentlichungstag und Bekanntmachung des Hinweises auf die Patenterteilung: **25.06.1997**
(21) Anmeldenummer: 94104924.9
(22) Anmeldetag: 29.03.1994
(51) Int. Cl.: F16L 33/00, F16L 13/10

(54) **Schlauchanschlusstülle**
Socket for a flexible pipe
Manchon pour tuyau flexible

(30) Priorität: 23.06.1993 DE 4320842
(43) Veröffentlichungstag der Anmeldung: 28.12.1994
(73) Patentinhaber: Firma Carl Freudenberg, D-69469 Weinheim (DE)
(72) Erfinder: Schneider, Franz, D-68519 Viernheim (DE); Ruthmann, Bernd, D-69493 Hirschberg (DE)

(56) Entgegenhaltungen:
- DE-A- 2 037 950
- DE-A- 3 536 493
- FR-A- 2 061 360
- GB-A- 961 233
- PATENT ABSTRACTS OF JAPAN, Bd. 12, Nr. 122 (C-488) 15. April 1988 & JP-A-62 241 848

## Beschreibung

Die Erfindung betrifft eine Schlauchanschlußtülle aus thermisch erweichbarem Werkstoff, die im Bereich der Mündung durch einen Stützring aus einem nichtsetzenden Werkstoff verstärkt ist.

Eine solche Schlauchanschlußtülle ist bekannt. Sie kann beispielsweise einen Bestandteil eines Luftansaugrohres bilden, welches durch auf den Außenumfang aufgeschobene und mit Hilfe von Schlauchbindern festgelegte Schläuche einerseits mit einem Luftfilter und andererseits mit dem Luftansaugstutzen einer Verbrennungskraftmaschine verbunden ist. Um dabei einen dauerhaften Halt im inneren der flexiblen Schläuche zu gewährleisten, ist es erforderlich, die Mündungen durch eingefügte Stützringe aus einem nichtkriechenden Werkstoff zu verstärken, beispielsweise durch Stützringe aus Metall. Diese werden im Anschluß an die Erzeugung des Ansaugrohres in deren Mündungen eingefügt, wobei sich auf Grund einer hochpräzisen Tolerierung der Abmessungen einerseits des Ansaugrohres und andererseits der Stützringe ein verliersicherer Halt ergibt. Die Herstellung eines solchen Ansaugrohres ist jedoch mit größerem wirtschaftlichen Aufwand verbunden.

Der Erfindung liegt die Aufgabe zugrunde, eine Schlauchanschlußtülle der eingangs genannten Art zu zeigen, die sich kostengünstiger als die bekannten Ausführungen herstellen läßt und einem mittels eines Schlauchbinders festgelegten Schlauch einen so großen Verformungswiderstand entgegensetzt, daß sich über lange Zeiträume eine sichere Festlegung des Schlauches ergibt.

Diese Aufgabe wird erfindungsgemäß bei einer Schlauchanschlußtülle der eingangsgenannten Art durch die kennzeichnenden Merkmale von Anspruch 1 gelöst. Auf vorteilhafte Ausgestaltungen nehmen die Unteransprüche bezug.

Bei der erfindungsgemäßen Schlauchanschlußtülle ist es vorgesehen, daß der Stützring unverrückbar an der Anschlußtülle festgelegt ist und die Anschlußtülle im Bereich der Mündung nur außenseitig umschließt. Der Stützring ist hierdurch wesentlich einfacher anzubringen als bei der vorbekannten Ausführung. Er ist außerdem leichter erkennbar, was es ausschließt, daß ein fehlender Stützring übersehen wird. Dennoch wird einem auf den Außenumfang aufgeschobenen, gegebenenfalls elastisch aufgeweiteten Schlauch und einem zu dessen Festlegung verwendeten Schlauchbinder langfristig der Widerstand entgegengesetzt, der für einen sicheren Halt erforderlich ist. Die eigentliche Anschlußtülle, welche aus einem thermisch erweichbaren Werkstoff besteht, wird durch diese Kräfte nicht belastet. Das Auftreten von Kriechvorgängen der Schlauchanschlußtülle, welche die Festlegung des Schlauches gefährden würden, ist dadurch nicht zu erwarten.

Die Schlauchanschlußtülle und der Stützring sind fest miteinander verbunden, beispielsweise durch eine gegenseitige Verklebung und / oder durch die Einbettung des Stützringes in eine U-förmig nach außen geöffnete Nut, welche die Anschlußtülle im Bereich der Mündung außenseitig umschließt. Insbesondere bei der letztgenannten Ausführung läßt sich das nachträgliche Auffügen des Schlauches sehr leicht bewerkstelligen, wenn der Stützring oberflächenbündig in der Nut aufgenommen und in die Wandung der Anschlußtülle eingebettet ist.

Der Stützring kann aus zwei Halbschalen bestehen, welche in das verwendete Werkzeug eingelegt und bei der Formgebung und Verfestigung der Schlauchanschlußtülle aus thermisch erweichbarem Werkstoff mit dieser verbunden werden. Passungsprobleme werden dadurch vermieden, was es gestattet, kostengünstig verfügbare Stützringe einer groben Tolerierung zu verwenden. Zusätzlich läßt sich eine gute adhäsive Festlegung des Stützringes am Außenumfang der Anschlußtülle erzielen, ohne daß es der Verwendung sekundärer Klebstoffe bedarf.

Thermisch erweichbare Werkstoffe haben im allgemeinen einen erheblich größeren linearen Wärmeausdehnungskoefizienten als Metalle. Aus diesem Grunde hat es sich bei einer Zusammenfügung der Teile in erwärmtem Zustand als vorteilhaft bewährt, wenn die Halbschalen im Bereich der Stoßstellen einen Abstand A voneinander haben. Dieser soll so groß bemessen sein, daß sich die Stoßstellen nach der sich an die Formgebung und Verfestigung der Schlauchanschlußtülle ergebenden, abkühlungsbedingten Schrumpfung bündig aneinander anliegen. Die absolute Größe des Wertes A ist von den jeweiligen Dimensionen sowie von den Eigenschaften der verwendeten Werkstoffe abhängig. Sie läßt sich durch einfache Versuche ermitteln.

Der Stützring und die Schlauchanschlußtülle können ineinander eingreifende Verkrallungen aufweisen um die Festlegung aneinander noch weiter zu verbessern.

Als zweckmäßig hat es sich erwiesen, wenn die Anschlußtülle in thermisch erweichtem Zustand an den Innenumfang des Stützringes angepreßt ist. Eine besonders gleichmäßige Anpressung in Umfangsrichtung läßt sich dabei erreichen, wenn die Anschlußtülle radial innerhalb des in ein Werkzeug eingelegten Stützringes durch Blasformung erzeugt wird. Sie kann nach ihrer Erkaltung und Verfestigung einschließlich der Stützringe gebrauchsfertig aus dem Formwerkzeug entnommen werden, wenn man noch einzuschneidende Öffnungen außer acht läßt.

Die Erfindung wird nachfolgend anhand der Zeichnung weiter verdeutlicht. Es zeigen :

Figur 1 ein rohrähnlich gestaltetes Formteil, welches an beiden Enden mit einer Schlauchanschlußtülle der erfindungsgemäßen Art versehen ist in perspektivischer Darstellung.

Figur 2 das Formteil gemäß Figur 1 in einer Ansicht von vorn.

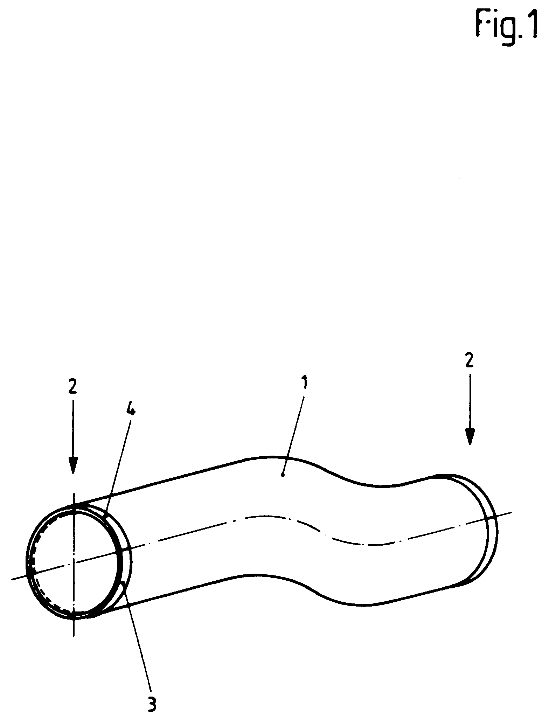

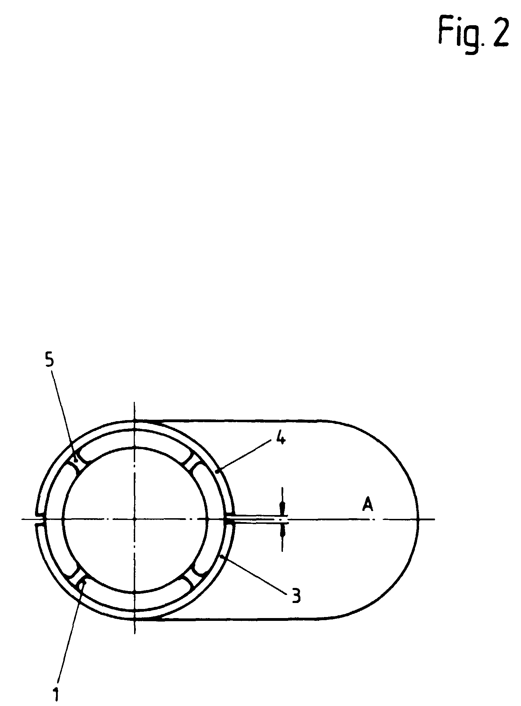

Das in Figur 1 gezeigte Formteil dient zur gegenseitigen Verbindung zwischen dem Luftfilter und dem Ansaugstutzen einer Verbrennungskraftmaschine. Es besteht aus einem thermisch erweichbaren Werkstoff und ist im Bereich seiner Mündungen durch mit dem Außenumfang verbundene, beispielsweise verklebte Stützringe 2 aus metallischem Werkstoff armiert. Die Stützringe 2 bestehen aus zwei Halbschalen 3,4. Diese haben bei der Formgebung und Verfestigung einen Abstand A voneinander, der so bemessen ist, daß sich im erkalteten Zustand eine gegenseitige Anlageberührung ergibt (Figur 2).

Zur Herstellung des in den beiden Figuren gezeigten Formteiles werden die den Stützring 2 bildenden Halbschalen 3,4 im inneren eines zweiteiligen Formwerkzeuges festgelegt. Das Formwerkzeug wird anschließend geschlossen und ein radial innerhalb der Stützringe 2 befindlicher, thermisch erweichter Vorformling aufgeblasen, bis der Innenumfang der Stützringe 2 und die Wandung des Formwerkzeuges durchgehend berührt sind. Im Zuge der sich anschließenden Abkühlung ergibt sich eine Verfestigung des erhaltenen Formteiles, was nach dem erneuten Öffnen aus dem Werkzeug entnommen werden kann.

An den die Stützringe 2 bildenden Halbschalen 3,4 sind radial nach innen vorstehende Verkrallungen 5 vorgesehen, welche beim Aufblähen des Vorformlings in dessen Wandung eindringen und einen festen Halt der Stützringe 2 am gebrauchsfertigen Formteil gewährleisten.

Für die bestimmungsgemäße Verwendung ist es vorgesehen, daß ein festzulegender Schlauch auf den Außenumfang der Schlauchanschlußtülle aufgeschoben und mit Hilfe eines Schlauchbinders festgelegt wird. Die radial nach innen gerichteten Kräfte des Schlauchbinders wirken sich dabei maßgeblich auf den Außenumfang der Stützringe aus. Diese bestehen aus einem nicht kriechenden, unnachgiebigen Werkstoff. Die Kräfte können dadurch problemlos im langfristigen Gebrauch aufgenommen werden.

Die erfindungsgemäße Anschlußtülle zeichnet sich neben einer kostengünstigen Herstellbarkeit durch ein sehr geringes Gewicht aus. Sie kann durch diese Merkmale vielfältigen Anwendungen zugänglich gemacht werden, beispielsweise auch an Kraftstoff- oder Kühlwasserleitungen.

## Patentansprüche

1. Schlauchanschlußtülle (1) aus thermisch erweichbarem Werkstoff, die im Bereich der Mündung durch einen Stützring (2) aus einem nichtsetzenden, nicht kriechenden Werkstoff verstärkt ist, dadurch gekennzeichnet, daß der Stützring (2) unverrückbar an der Anschlußtülle (1) festgelegt ist und die Anschlußtülle (1) im Bereich der Mündung nur außenseitig umschließt.

2. Anschlußtülle nach Anspruch 1, dadurch gekennzeichnet, daß der Stützring (2) oberflächenbündig in der Anschlußtülle (1) eingebettet ist.

3. Anschlußtülle nach Anspruch 1 bis 2, dadurch gekennzeichnet, daß der Stützring (2) aus zwei Halbschalen (3,4) besteht.

4. Anschlußtülle nach Anspruch 3, dadurch gekennzeichnet, daß die Halbschalen (3,4) im Bereich der Stoßstellen einen bestimmten Abstand (A) voneinander haben.

5. Anschlußtülle nach Anspruch 1 bis 4, dadurch gekennzeichnet, daß der Stützring (2) und die Schlauchanschlußtülle (1) ineinander eingreifende Verkrallungen (5) aufweisen.

6. Anschlußtülle nach Anspruch 1 bis 5, dadurch gekennzeichnet, daß die Anschlußtülle (1) in thermisch erweichtem Zustand an den Innenumfang des Stützringes (2) angepreßt ist.

7. Anschlußtülle nach Anspruch 6, dadurch gekennzeichnet, daß die Anschlußtülle (1) durch Blasformung erzeugt ist.

## Claims

1. A hose connector (1) which is made of a material which can be softened under the effect of heat and is reinforced in the region of the mouth by a supporting ring (2) made of a non-settling, anti-creep material, characterized in that the supporting ring (2) is fixed on the hose connector (1) so as to be non-displaceable and surrounds the hose connector (1) only on the outside in the region of the mouth.

2. A hose connector according to claim 1, characterized in that the supporting ring (2) is embedded in the hose connector (1) flush with the surface.

3. A hose connector according to either of claims 1 and 2, characterized in that the supporting ring (2) is composed of two semi-shells (3, 4).

4. A hose connector according to claim 3, characterized in that the semi-shells (3, 4) have a specific spacing (A) from one another in the region of the joints.

5. A hose connector according to any of claims 1 to 4, characterized in that the supporting ring (2) and the hose connector (1) have claws (5) which engage in one another.

6. A hose connector according to any of claims 1 to 5, characterized in that the hose connector (1) is pressed against the inside circumference of the supporting ring (2) in the thermally softened state.

7. A hose connector according to claim 6, characterized in that the hose connector (1) is produced by blow-moulding.

## Revendications

1. Manchon pour tuyau flexible (1) en matière pouvant se ramollir à la chaleur, qui est renforcé dans la zone de l'ouverture par une bague d'appui (2) en matière ne s'affaissant pas et ne subissant pas le fluage, caractérisé en ce que la bague d'appui (2) est fixée de façon immuable au manchon (1) et entoure le manchon (1) uniquement du côté externe dans la zone de l'ouverture.

2. Manchon selon la revendication 1, caractérisé en ce que la bague d'appui (2) est encastrée dans le manchon (1) au niveau de la surface.

3. Manchon selon l'une des revendications 1 à 2, caractérisé en ce que la bague d'appui (2) est composée de deux demi-coques (3, 4).

4. Manchon selon la revendication 3, caractérisé en ce que les demi-coques (3, 4) sont, dans la zone des points d'impact, à un certain intervalle (A) l'une de l'autre.

5. Manchon selon l'une des revendications 1 à 4, caractérisé en ce que la bague d'appui (2) et le manchon pour tuyau flexible (1) présentent des griffes (5) s'engageant les unes dans les autres.

6. Manchon selon l'une des revendications 1 à 5, caractérisé en ce que le manchon (1) est pressé, dans un état ramolli à la chaleur, contre la périphérie intérieure de la bague d'appui (2).

7. Manchon selon la revendication 6, caractérisé en ce que le manchon (1) est fabriqué par soufflage sur matrice.
